# EUROPEAN PATENT APPLICATION

(11) **EP 4 588 560 A1**
(43) Date of publication of application: **23.07.2025**
(21) Application number: 24823629.1
(22) Date of filing: 05.06.2024
(51) Int. Cl.: B01J 19/24

(54) **ELECTRIC HEATING REACTOR**

(30) Priority: 12.06.2023 KR 20230074915
(71) Applicant: LG CHEM, LTD., Seoul 07336 (KR)
(72) Inventor: PARK, Hongseok, Daejeon 34122 (KR); KANG, Mooseong, Daejeon 34122 (KR); CHOI, Jaehoon, Daejeon 34122 (KR)
(74) Representative: Plasseraud IP
(86) International application number: PCT/KR2024/007737
(87) International publication number: WO 2024/258109

(57) **Abstract**

Disclosed is an electrical heating reactor. An electrical heating reactor includes: at least one reaction tube having a first passage through which a reactant passes and configured to heat the reactant passing through the first passage; a shell spaced apart from the reaction tube, surrounding all the reaction tubes, having a second passage through which a reactant passes between the shell and the reaction tube, and configured to heat the reactant passing through the second passage; a first power supply configured to supply power to the reaction tube; and a second power supply configured to supply power to the shell, in which the first power supply and the second power supply may be independently controlled.

## Description

### [Technical Field]

### CROSS-REFERENCE TO RELATED APPLICATION

This application claims priority to and the benefit of Korean Patent Application No. 10-2023-0074915 filed in the Korean Intellectual Property Office on June 12, 2023, the entire contents of which are incorporated herein by reference.

The present disclosure relates to an electrical heating reactor in which both the inside and outside of a reaction tube may be used as reaction regions by utilizing an electrical heating technology.

### [Background Art]

In a chemical industry, natural gas is used as a fuel to maintain the temperature of various facilities (for example, crackers, reformers, reactors, or boilers) high. However, heating by combustion of natural gas is not only inefficient in terms of energy consumption, but also a major cause of carbon emissions. Therefore, efforts are being made to replace a heating method by combustion of natural gas with an electrical heating method.

The above information disclosed in this Description of the Related Art section is only for enhancement of understanding of the background of the disclosure and therefore it may contain information that does not form the prior art that is already known in this country to a person of ordinary skill in the art.

### [Disclosure]

### [Technical Problem]

The present disclosure attempts to provide an electrical heating reactor in which both the inside and outside of a reaction tube may be used as reaction regions by utilizing an electrical heating technology.

### [Technical Solution]

According to an aspect of the present disclosure, an electrical heating reactor includes: at least one reaction tube having a first passage through which a reactant passes and configured to heat the reactant passing through the first passage; a shell spaced apart from the reaction tube, surrounding all the reaction tubes, having a second passage through which a reactant passes between the shell and the reaction tube, and configured to heat the reactant passing through the second passage; a first power supply configured to supply power to the reaction tube; and a second power supply configured to supply power to the shell.

The first power supply and the second power supply may be independently controlled.

The first passage may define a first reaction region, and the second passage may define a second reaction region.

The electrical heating reactor may further include: a first reactor inlet communicating with the first reaction region to supply the reactant to the first reaction region; a first reactor outlet communicating with the first reaction region to discharge the reactant from the first reaction region; a second reactor inlet communicating with the second reaction region to supply the reactant to the second reaction region; and a second reactor outlet communicating with the second reaction region to discharge the reactant from the second reaction region.

The first reaction region and the second reaction region may not communicate with each other inside the electrical heating reactor.

In one example, the first reaction region and the second reaction region may be controlled to have the same temperature, and the same reactants may be supplied to the first reaction region and the second reaction region to cause the same reaction.

In another example, the first reaction region and the second reaction region may be controlled to have the same temperature, and different reactants may be supplied to the first reaction region and the second reaction region to cause different reactions at the same time.

In another example, the first reaction region and the second reaction region may be controlled to have different temperatures, and different reactants may be supplied to the first reaction region and the second reaction region to cause different reactions at the same time.

The electrical heating reactor may further include: a connection passage through which the first reaction region and the second reaction region communicate with each other outside the electrical heating reactor.

In another example, the first reaction region and the second reaction region may be controlled to have different temperatures, the same reactants may be supplied to the first reaction region and the second reaction region, the reactant may be preheated in one of the first reaction region and the second reaction region, and the preheated reactant may be supplied to the other of the first reaction region and the second reaction region to cause a main reaction.

In another example, the first reaction region and the second reaction region may be controlled to have different temperatures, a first reactant may be supplied to one of the first reaction region and the second reaction region to cause a first reaction, the first reactant may be supplied to the other of the first reaction region and the second reaction region through the connection passage, and a second reactant may be additionally supplied to the second reaction region to cause a second reaction of the first and second reactants.

The electrical heating reactor may further include: an insulator surrounding at least a part of the shell to thermally insulate the shell.

### [Advantageous Effects]

According to the present disclosure, the temperature inside the reactor may be efficiently and uniformly maintained by utilizing an electrical heating technology.

In addition, not only the inside of the reaction tube but also the outside of the reaction tube may be utilized as the reaction regions, which may allow for a higher capacity within a reactor of the same size. Therefore, energy efficiency of a reaction process may be improved.

Other effects that may be obtained or are predicted by an embodiment of the present disclosure will be explicitly or implicitly described in a detailed description of the embodiment of the present disclosure. That is, various effects that are predicted according to an embodiment of the present disclosure will be described in the following detailed description.

### [Description of the Drawings]

Embodiments of the present disclosure may be better understood with reference to the following description taken in conjunction with the accompanying drawings, in which like reference numerals denote identical or functionally similar elements.
FIG. 1 is a schematic cross-sectional view of an electrical heating reactor according to an embodiment of the present disclosure;
FIG. 2 is a plan view illustrating a cross section of the electrical heating reactor according to an embodiment of the present disclosure;
FIG. 3 is a side view of a cross section of a part of the electrical heating reactor according to an embodiment of the present disclosure;
FIG. 4 illustrates an example of using the electrical heating reactor according to an embodiment of the present disclosure; and
FIG. 5 illustrates another example of using the electrical heating reactor according to an embodiment of the present disclosure.

It is to be understood that the drawings referenced above are not necessarily drawn to scale, and present somewhat simplified representations of various preferred features illustrating the basic principles of the present disclosure. Specific design features of the present disclosure as included herein, including, for example, specific dimensions, orientations, locations, and shapes will be determined in part by the particularly intended application and use environment.

### [Mode for Invention]

Terms used herein are for describing particular embodiments and are not intended to limit the present disclosure. As used herein, singular forms are intended to include plural forms as well, unless the context clearly indicates otherwise. It is to be further understood that the terms "includes" and/or "including" used in the present specification specify the presence of stated features, integers, steps, operations, elements, and/or components, but do not preclude the presence or addition of one or more other features, integers, steps, operations, elements, components, and/or combinations thereof. As used herein, the term "and/or" includes any or all combinations of one or more of the associated listed items.

In addition, it is understood that one or more of the following methods or the aspects thereof may be executed by at least one controller. The term "controller" may refer to a hardware device including a memory and a processor. The memory is configured to store program commands, and the processor is specially programmed so as to execute program commands to perform one or more processes described in more detail below. The controller may control operations of units, modules, components, devices, or similar matters as described herein. Further, it is understood that the following methods may be executed by a device including the controller together with one or more other components as recognized by those skilled in the art.

Further, the controller according to the present disclosure may be implemented as a non-transitory computer-readable recording medium including program commands executable by a processor. Examples of the computer-readable recording medium may include a read only memory (ROM), a random access memory (RAM), a compact disc (CD) ROM, magnetic tapes, floppy discs, flash drives, smart cards, and optical data storage devices, but the computer-readable recording medium is not limited thereto. The computer-readable recording medium may also be distributed across a computer network such that program commands are stored and executed by a distributed method such as a telematics server or a controller area network (CAN).

According to the present disclosure, an electrical heating reactor includes: at least one reaction tube having a first passage through which a reactant passes and configured to heat the reactant passing through the first passage; a shell spaced apart from the reaction tube, surrounding all the reaction tubes, having a second passage through which a reactant passes between the shell and the reaction tube, and configured to heat the reactant passing through the second passage; a first power supply configured to supply power to the reaction tube; and a second power supply configured to supply power to the shell. With such a configuration, according to the present disclosure, a temperature inside the reactor may be efficiently and uniformly maintained by utilizing an electrical heating technology.

The first power supply and the second power supply may be independently controlled. That is, the supply of power to the first reaction region defined by the first passage and the supply of power to the second reaction region defined by the second passage may be independently controlled.

The first reaction region and the second reaction region may be controlled to have different temperatures. In a case where the first reaction region and the second reaction region are controlled to have the same temperature, it is possible to achieve reaction region expansion by supplying the same reactants to the first reaction region and the second reaction region. In contrast, in a case where the first reaction region and the second reaction region are controlled to have different temperatures, first reactants may be supplied to the first reaction region, and second reactants may be supplied to the second reaction region, thereby allowing different reactions to occur within one reactor. In one example, the reactant may be supplied to the second reaction region to preheat the reactant, and the preheated reactant may be supplied to the first reaction region to cause a main reaction.

The electrical heating reactor may further include an insulator surrounding the shell to thermally insulate the shell. Accordingly, energy efficiency may be improved by reducing unnecessary heat loss to the outside of the electrical heating reactor.

Hereinafter, an embodiment of the present disclosure will be described in detail with reference to the attached drawings.

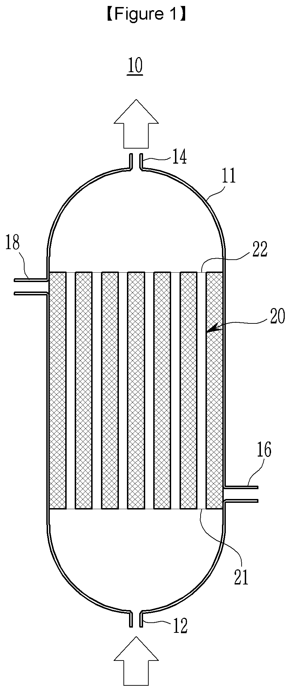

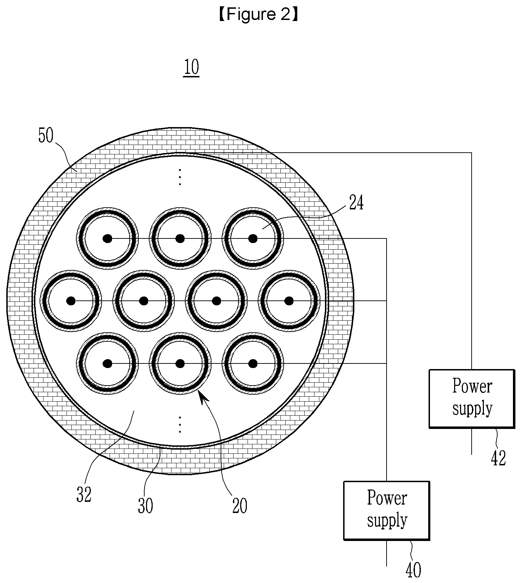

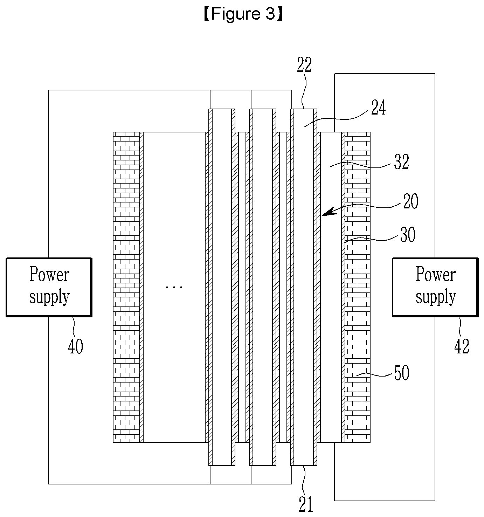

FIG. 1 is a schematic cross-sectional view of an electrical heating reactor according to an embodiment of the present disclosure. FIG. 2 is a plan view illustrating a cross section of the electrical heating reactor according to an embodiment of the present disclosure. FIG. 3 is a side view of a cross section of a part of the electrical heating reactor according to an embodiment of the present disclosure.

As illustrated in FIGS. 1 to 3, an electrical heating reactor 10 according to an embodiment of the present disclosure may be configured to receive power to generate heat and heat a reactant inside the electrical heating reactor 10 by using the heat. The electrical heating reactor 10 may include a reactor housing 11, at least one reaction tube 20, and a shell 30.

The reactor housing 11 may be formed in a substantially cylindrical shape, and the at least one reaction tube 20 and the shell 30 may be provided inside the reactor housing 11. A first reactor inlet 12 may be formed on one side of the reactor housing 11, and a first reactor outlet 14 may be formed on the other side of the reactor housing 11. The first reactor inlet 12 and the first reactor outlet 14 may fluidly communicate with the reaction tube 20, as a result of which a reactant introduced into the reactor housing 11 through the first reactor inlet 12 may pass through the reaction tube 20 and be electrically heated, and then be discharged out of the reactor housing 11 through the first reactor outlet 14. Here, the reactant may be electrically heated within the reaction tube 20 and a target reaction may occur, and thus, a region within the reaction tube 20 will be referred to as a first reaction region 24.

In addition, a second reactor inlet 16 may be formed on one side of the reactor housing 11, and a second reactor outlet 18 may be formed on the other side of the reactor housing 11. The second reactor inlet 16 and the second reactor outlet 18 may fluidly communicate with the outside of the reaction tube 20 and the inside of the shell 30, and the reactant introduced into the reactor housing 11 through the second reactor inlet 16 may pass through the outside of the reaction tube 20 and the inside of the shell 30, be electrically heated, and then be discharged out of the reactor housing 11 through the second reactor outlet 18. Here, the reactant may be electrically heated outside the reaction tube 20 and inside the shell 30, and a target reaction may occur. Therefore, a region outside the reaction tube 20 and inside the shell 30 will be referred to as a second reaction region 32.

Meanwhile, the first reaction region 24 and the second reaction region 32 may not communicate with each other inside the reactor housing 11 and may communicate with each other outside the reactor housing 11. More specifically, the reactant introduced into the first reaction region 24 through the first reactor inlet 12 may not be introduced into the second reaction region 32 inside the reactor housing 11 and may be discharged out of the reactor housing 11 through the first reactor outlet 14. Similarly, the reactant introduced into the second reaction region 32 through the second reactor inlet 16 may not be introduced into the first reaction region 24 inside the reactor housing 11 and may be discharged out of the reactor housing 11 through the second reactor outlet 18.

The reaction tube 20 may be made of a metal material having high resistivity, and a first passage through which the reactant passes may be formed in a length direction inside the reaction tube 20. For example, the reaction tube 20 may be formed in an annular pipe shape, and the first passage may be formed in the length direction inside the reaction tube 20. When power is applied to the reaction tube 20, the reaction tube 20 may generate heat due to the high resistivity, and the heat may heat the reactant in the first passage. Therefore, the first passage may define the first reaction region 24 in which the reaction of the reactant occurs.

One end of the reaction tube 20 that is adjacent to the first reactor inlet 12 may define a tube inlet 21, and the other end of the reaction tube 20 that is adjacent to the first reactor outlet 14 may define a tube outlet 22. The reactant introduced into the reactor housing 11 through the first reactor inlet 12 may be introduced into the reaction tube 20 through the tube inlet 21, pass through the first reaction region 24 defined by the first passage, and be electrically heated to cause a target reaction. The reactant reacting in the first reaction region 24 may be discharged out of the reactor housing 11 through the tube outlet 22 and the first reactor outlet 14.

The shell 30 may be made of a metal material having high resistivity, and a second passage through which the reactant passes may be formed in the length direction outside the reaction tube 20 and inside the shell 30. For example, when power is applied to the shell 30, the shell 30 may generate heat due to the high resistivity, and the heat may heat the reactant in the second passage. Therefore, the second passage may define the second reaction region 32 in which the reaction of the reactant occurs.

The reactant introduced into the reactor housing 11 through the second reactor inlet 16 may pass through the second reaction region 32 defined by the second passage and be electrically heated to cause a desired reaction. The reactant reacting in the second reaction region 32 may be discharged out of the reactor housing 11 through the second reactor outlet 18.

A first power supply 40 may be configured to supply power to the reaction tube 20. That is, the first power supply 40 may be electrically connected to all the reaction tubes 20 and may supply the same amount of power to all the reaction tubes 20. The first power supply 40 may be an alternating current (AC) power supply or a direct current (DC) power supply.

A second power supply 42 may be configured to supply power to the shell 30. The first power supply 40 and the second power supply 42 may be independently controlled. In particular, the amount of power supplied by the second power supply 42 to the shell 30 may be different from the amount of power supplied by the first power supply 40 to the reaction tube 20. Accordingly, a temperature of the first reaction region 24 and a temperature of the second reaction region 32 may be controlled differently from each other, and the reaction occurring in the first reaction region 24 and the reaction occurring in the second reaction region 32 may be different from each other. The second power supply 42 may be an AC power supply or a DC power supply.

Sockets (not illustrated) may be mounted on one end and the other end of the reaction tube 20, and the first power supply 40 may supply power to the reaction tube 20 through the sockets. Similarly, sockets (not illustrated) may be mounted on one end and the other end of the shell 30, and the second power supply 42 may supply power to the shell 30 through the sockets. In addition, a cooling device is mounted on each of the sockets to cool the sockets.

An insulator 50 may surround at least a part of the shell 30 to thermally insulate the shell 30. As illustrated in FIG. 2, the insulator 50 may surround the entire shell 30, but is not limited thereto, and may surround only a part of the shell 30. Since the insulator 50 may thermally insulate the shell 30 by surrounding the shell 30, an unnecessary heat loss to the outside of the shell 30 may be reduced, so that energy efficiency may be improved, and a temperature inside the shell 30 may be efficiently and uniformly maintained.

In addition, the insulator 50 may electrically isolate the shell 30 and the outside of the shell 30, thereby preventing safety accidents that may occur due to a current that may flow in the shell 30.

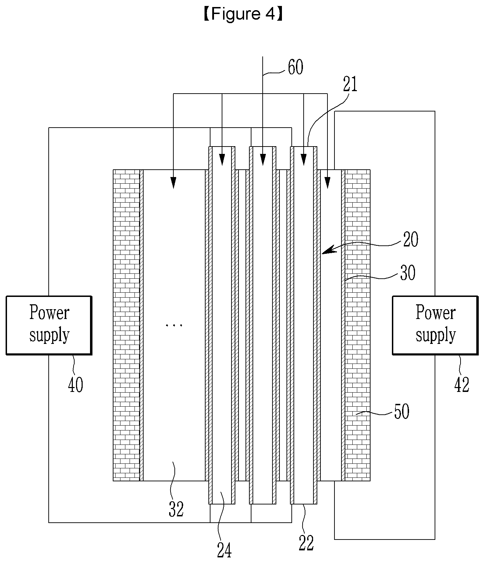

FIG. 4 illustrates an example of using the electrical heating reactor according to an embodiment of the present disclosure. FIG. 4 illustrates a case where the first reaction region 24 (that is, the inside of the reaction tube 20) and the second reaction region 32 (that is, the outside of the reaction tube 20 and the inside of the shell 30) are controlled to have the same temperature.

As illustrated in FIG. 4, a first reactant 60 may be supplied to the first reaction region 24 and the second reaction region 32 at the same time. Since the first reactant 60 is supplied to the first reaction region 24 and the second reaction region 32, and the first reaction region 24 and the second reaction region 32 are controlled to have the same temperature, the first reactant 60 may undergoes a desired reaction in both the first and second reaction regions 24 and 32. Accordingly, the reaction region where the same reaction occurs may be expanded.

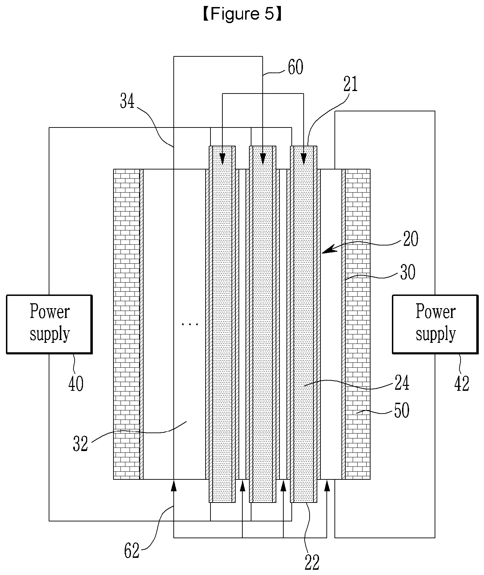

FIG. 5 illustrates another example of using the electrical heating reactor according to an embodiment of the present disclosure. FIG. 5 illustrates a case where the first reaction region 24 (that is, the inside of the reaction tube 20) and the second reaction region 32 (that is, the outside of the reaction tube 20 and the inside of the shell 30) are controlled to have different temperatures.

As illustrated in FIG. 5, a second reactant 62 may be supplied to the second reaction region 32 through the second reactor inlet 16, undergo a desired reaction to become the first reactant 60, and be discharged from the second reaction region 32 through the second reactor outlet 18. The second reactor outlet 18 may be connected to the first reactor inlet 12 through a connection passage 34 and supplied to the first reaction region 24 through the first reactor inlet 12. The first reactant 60 may undergo a desired reaction in the first reaction region 24 and be discharged from the first reaction region 24 through the first reactor outlet 14.

FIG. 5 illustrates a case where the second reactant 62 reacts in the second reaction region 32 to become the first reactant 60, and the first reactant 60 undergoes a reaction in the first reaction region 24. However, examples of use of the electrical heating reactor 10 of FIG. 5 are not limited to the illustrated example. In one example, the first reactant 60 may undergo a first reaction in the first reaction region 24, the second reactant 62 may undergo a second reaction in the second reaction region 32, and the first and second reactants 60 and 62 may be reactionally unrelated to each other. In this case, the first and second reaction regions 24 and 32 may not communicate with each other through the connection passage 34. In another example, the first reactant 60 may be preheated in one of the first and second reaction regions 24 and 32 and supplied to the other of the first and second reaction regions 24 and 32 through the connection passage 34, and a main reaction may occur in the other of the first and second reaction regions 24 and 32. In another example, the first reactant 60 may undergo the first reaction (or be preheated) in one of the first and second reaction regions 24 and 32 and supplied to the other of the first and second reaction regions 24 and 32 through the connection passage 34, and the second reactant 62 may be supplied to the other of the first and second reaction regions 24 and 32 together with the first reactant 60 to cause reactions of the first and second reactants 60 and 62 in the other of the first and second reaction regions 24 and 32.

While this invention has been described in connection with what is presently considered to be practical embodiments, it is to be understood that the invention is not limited to the disclosed embodiments. On the contrary, it is intended to cover various modifications and equivalent arrangements included within the spirit and scope of the appended claims.

## Claims

1. An electrical heating reactor comprising: at least one reaction tube having a first passage through which a reactant passes and configured to heat the reactant passing through the first passage;
a shell spaced apart from the reaction tube, surrounding all the reaction tubes, having a second passage through which a reactant passes between the shell and the reaction tube, and configured to heat the reactant passing through the second passage;
a first power supply configured to supply power to the reaction tube; and
a second power supply configured to supply power to the shell.

2. The electrical heating reactor of claim 1, wherein
the first power supply and the second power supply are independently controlled.

3. The electrical heating reactor of claim 1, wherein
the first passage defines a first reaction region, and the second passage defines a second reaction region, and
the electrical heating reactor further comprises:
a first reactor inlet communicating with the first reaction region to supply the reactant to the first reaction region;
a first reactor outlet communicating with the first reaction region to discharge the reactant from the first reaction region;
a second reactor inlet communicating with the second reaction region to supply the reactant to the second reaction region; and
a second reactor outlet communicating with the second reaction region to discharge the reactant from the second reaction region.

4. The electrical heating reactor of claim 3, wherein
the first reaction region and the second reaction region do not communicate with each other inside the electrical heating reactor.

5. The electrical heating reactor of claim 3, wherein
the first reaction region and the second reaction region are controlled to have the same temperature, and
the same reactants are supplied to the first reaction region and the second reaction region to cause the same reaction.

6. The electrical heating reactor of claim 3, wherein
the first reaction region and the second reaction region are controlled to have the same temperature, and
different reactants are supplied to the first reaction region and the second reaction region to cause different reactions at the same time.

7. The electrical heating reactor of claim 3, wherein
the first reaction region and the second reaction region are controlled to have different temperatures, and
different reactants are supplied to the first reaction region and the second reaction region to cause different reactions at the same time.

8. The electrical heating reactor of claim 3, further comprising:
a connection passage through which the first reaction region and the second reaction region communicate with each other outside the electrical heating reactor,
wherein the first reaction region and the second reaction region are controlled to have different temperatures,
the same reactants are supplied to the first reaction region and the second reaction region, and
the reactant is preheated in one of the first reaction region and the second reaction region, and the preheated reactant is supplied to the other of the first reaction region and the second reaction region to cause a main reaction.

9. The electrical heating reactor of claim 3, further comprising:
a connection passage through which the first reaction region and the second reaction region communicate with each other outside the electrical heating reactor,
wherein the first reaction region and the second reaction region are controlled to have different temperatures, and
a first reactant is supplied to one of the first reaction region and the second reaction region to cause a first reaction, the first reactant is supplied to the other of the first reaction region and the second reaction region through the connection passage, and a second reactant is additionally supplied to the second reaction region to cause a second reaction of the first and second reactants.

10. The electrical heating reactor of claim 1, further comprising:
an insulator surrounding at least a part of the shell to thermally insulate the shell.
